# EUROPEAN PATENT APPLICATION

(11) **EP 3 989 133 A1**
(43) Date of publication of application: **27.04.2022**
(21) Application number: 20203100.1
(22) Date of filing: 21.10.2020
(51) Int. Cl.: G06Q 10/00

(54) **THE RECYCLING PROCESS OF A RECYCLABLE SPORTS ARTICLE AND GENERATION PROCESS FOR A REGENERATED SPORTS ARTICLE**

(71) Applicant: adidas AG, 91074 Herzogenaurach (DE)
(72) Inventor: HOFMANN, Eva, 91074 Herzogenaurach (DE); KIRU, Dharan, 91074 Herzogenaurach (DE); PRICE, Daniel Stephen, 91074 Herzogenaurach (DE); SMITH, Paul Leonard Michael, 91074 Herzogenaurach (DE)
(74) Representative: Mader, Joachim

(57) **Abstract**

The present invention relates to a system for recording a recycling process of a recyclable sports article and a generation process of a regenerated sports article, the system comprising; a network of connected receivers configured to receive (i.) information regarding the recyclable sports article formed of a plurality of parts; (ii.) information regarding the separation of the plurality of parts of the recyclable sports article; (iii.) information regarding the recycling of the separated plurality of parts; and (iv.) information regarding building the regenerated sports article from the recycled plurality of parts a blockchain ledger, wherein the connected receivers are configured to record the information (i.) to (iv.) in the blockchain ledger, wherein the blockchain ledger comprises at least one reference data block; and wherein the system is configured to compare information (i.) to the at least one reference data block to validate that the recyclable sports article is acceptable for the recycling process.

## Description

### 1. Technical field

The present invention relates to a system for recording the recycling process of a recyclable sports article and the generation process of a regenerated sports article and a method of producing a regenerated sports article.

### 2. Prior art

Footwear and apparel articles have limited life spans. Through use, all articles wear out gradually over time. Particularly footwear and apparel used in high energy or impact activities such as sportswear, these may wear out faster than other garments. Additionally, fashions and trends change over time, making some articles less desirable, so consumers wish to get rid of them.

Footwear and apparel are consumer goods that predominantly end up in landfill at the end of their useful life. Each article is made of a number of different materials to optimize comfort and performance. Usually each of these materials are neither recyclable nor biodegradable. This results in a large contribution to landfill sites.

It is newly known to make footwear and apparel that is either recyclable or biodegradable in order to reduce the effect of these articles on landfills. Specifically for recyclable materials, it is possible to make articles that are either made of materials that can be recycled into completely different materials/articles, or the materials can be recycled back to a state where they can be used in the same articles again.

Material from articles can be recycled back into those same articles. In this case, shoes and garments made entirely of a material such as TPU, nylon or polyester can be reclaimed and used again in a new shoe or garment.

In order for this recycling to work in practice, there needs to be a system in place to trace each article sold, register returned articles and track material through the recycling process.

The multiple physical processes that can be used in recycling a piece of footwear or apparel are broadly known. Different materials require recycling in different ways. Some materials only require mechanical recycling, such as shredding, before being easily reformed into a reusable state. Some materials can only be recycled using a chemical process. Many materials require a combination of both.

Some articles can be made entirely out of a single material so that the whole article can be recycled as one. However more complex articles, such as footwear, are often made of lots of different materials, or at least lots of different grades of the same material. In this case different parts of the article have to be separated from each other before they can be recycled.

The ability to verify articles into and trace articles through these known recycling processes is much less known. Although possible tools exist (tracking devices and software), the interaction between the tracking and the recycling is not well known.

As discussed further below, the use of blockchain systems has a lot of potential for use in this area. The combination of blockchain technology and recycling for articles (in any technology area) is known from CN 110598882 A, WO 2019/243848 A1, EP 3579157 A1, GB 2569736 A, GB 201807456 A.

### 3. Summary of invention

The above-mentioned problem is at least partly solved by the subject matter of the independent claims of the present invention. Exemplary embodiments of the invention are described in the dependent claims.

In an embodiment, the present invention provides a system for recording the recycling process of a recyclable sports article and the generation process of a regenerated sports article, the system comprising; a network of connected receivers configured to receive (i.) information regarding the recyclable sports article formed of a plurality of parts; (ii.) information regarding the separation of the plurality of parts of the recyclable sports article; (iii.) information regarding the recycling of the separated plurality of parts; and (iv.) information regarding building the regenerated sports article from the recycled plurality of parts a blockchain ledger, wherein the connected receivers are configured to record the information (i.) to (iv.) in the blockchain ledger, wherein the blockchain ledger comprises at least one reference data block; and wherein the system is configured to compare information (i.) to the at least one reference data block to validate that the recyclable sports article is acceptable for the recycling process.

In this embodiment, the network of connected receivers maybe a peer-to-peer network of connected receivers. This way information can be input from any one of the connected receivers and validated by the others for entry into the blockchain ledger. There is no single location where the information is stored, and validated entries can be accessed from all receiver locations. This provides the advantage that the blockchain ledger can be updated from all the different locations involved in the recycling process - a store, a consumer or purchaser's home, a collection centre, a recycling facility etc. All the different users can all feed into the information being stored - a sales assistant, a consumer, a collection driver, a recycling facility worker etc.

Another advantage of this embodiment of the present invention is that a complex recycling process of typically non-recyclable articles is recorded in a way that provides transparency to the process. It is essential to provide transparency in these sorts of processes so that external regulators can confirm that recycling standards are met. Similarly, it is essential to provide transparency so that consumers can trust that their used articles are being recycled in an effective way, and that regenerated articles have been built of recycled parts as promised.

The inbuilt verification step is advantageous because it reduces the possibility of contamination within the process. Having the information for verification available to every system user at every collection point ensures that the same standards are met at each collection point. This ensures consistency over the whole process. Having the standards built into the blockchain ensures that they cannot be changed or tampered with. This also ensures consistency over the recycling process.

In another embodiment, the present invention provides an apparatus for recording a recycling process of a recyclable sports article and a generation process of a regenerated sports article comprising a receiver configured to receive the above-mentioned information (i.)-(iv.), wherein the apparatus is configured to have access to some parts of a blockchain ledger, wherein the apparatus is configured to record the information (i.) to (iv.) in the blockchain ledger and wherein the apparatus is configured to compare the above-mentioned information (i.) to at least one reference data block of the blockchain ledger to validate that the recyclable sports article is acceptable for the recycling process. The receiver may be part of a network of connected receivers. The receiver may have access remotely and/or locally. The blockchain ledger may be centralized.

In some embodiments, the reference data block may include a list of suitable article origins and/or a list of minimum quality values. The list of suitable article origins provides a complete list of article manufacturers or manufacturing facilities that make articles that are suitable for the recycling process. Different manufacturers or manufacturing facilities can be assessed and added to the list to be approved for use in the recycling process. Alternatively or additionally, the reference data block may include a list of certification marks that confirm an article is suitable for the recycling process. Certification marks may be provided by external regulators or organizations. By including these references, articles that are not suitable for the recycling process can be eliminated from the process. Similarly, the list of minimum quality values provides a set of the minimum necessary measurable values of an article to ensure the article is of high enough quality to be included in the recycling process. By having these minimums that must be met, articles that are of too low a quality can be eliminated from the process.

In some embodiments the system further comprises a mobile device application, accessible to consumers of the recyclable sports article or the regenerated sports article. A mobile device application ("app") is the easiest way to distribute access to the recycling process information by consumers and consumers across many locations. The app also allows for easy input of information by the consumer, as well as delivery of information from the recycling companies to the consumer.

In some embodiments information regarding activities performed in the recyclable sports article by the consumer is recordable in the mobile device application, and this information regarding activities is transmitted to the connected receivers and recorded in the blockchain ledger. This information is used to inform decisions about when the article is ready to be recycled. Sports articles in particular have a limited life span - they are expected to perform to a certain standard, and once that standard drops, they are no longer desirable. For example, once the energy return in the midsole of a running shoe is no longer effective, the shoe should be recycled. The energy return is known to decrease after a certain number of miles have been run in the shoes. Therefore, if distance run is tracked by the consumer, then the total miles can be tallied and recorded in the blockchain ledger. Similarly, once the sweat wicking properties of a sports top are no longer effective in hot weather, the top should be recycled. The sweat wicking properties may be known to decrease after a certain number of uses and/or washes of the sports top. Therefore, if number of workouts performed in the top is tracked by the consumer then the total number of uses can be tallied and recorded in the blockchain ledger.

In some embodiments the system further comprises an alert transmitter that generates alerts within the mobile device application based on information recorded within the blockchain ledger. In some embodiments the alert transmitter generates a return alert for when the recyclable sports article is to be recycled. In some embodiments the alert transmitter calculates the time elapsed from a purchase of the recyclable sports article recorded in the blockchain ledger and the current date and generates a return alert if the calculated time elapsed is above a maximum allowed time elapsed. In some embodiments the alert transmitter calculates a total amount of activity performed in the recyclable sports article recorded in the blockchain ledger and generates a return alert if the calculated total activity is above a maximum allowed activity. The advantage of these embodiments is that the decision about whether an article should be recycled does not lie entirely with the consumer. The consumer may have an emotional attachment to the article, discouraging them from returning the article for recycling. Alternatively, the consumer may not have a good knowledge of when the article is no longer performing effectively and may wait overly long to return a used article. By providing a direct communication link between those operating the recycling process or producing the articles, and the consumer, these decisions can be influenced.

In some embodiments a recycling facility sends information to the connected receivers regarding recyclable sports articles required for a minimum batch size of the recycling process, and this information triggers the alert receiver to generate a return alert to the consumers of these recyclable sports articles. The advantage of this embodiment is that the rate of collection of recyclable articles is not totally left to rely on the consumers. Many recycling processes have a minimum batch size in order to be effective or efficient. Equipment may not be able to operate with too little material. Energy, water or other material costs may be too high for a process only done in small batches. Waiting for consumers to return certain articles could cause delays in supplying particular parts for the manufacture of regenerated articles. Therefore, requesting the return of the certain articles required, even if they could have been used longer, may make the recycling process more viable.

In some embodiments purchase of the recyclable sports article or the regenerated sports article is initiated by a consumer through the mobile phone app.

In some embodiments transferal of the recyclable sports article to a sorting or recycling facility is initiated by a consumer through the mobile phone app.

In some embodiments some information received by the receiver is visible through the mobile phone app to the consumer of the recyclable sports article or the regenerated sports article

In another embodiment, the present invention provides a method of producing a regenerated sports article, comprising the steps of obtaining a blockchain ledger stored on a network of connected receivers, wherein the blockchain ledger comprises at least one reference data block; obtaining a recyclable sports article, wherein the recyclable sports article is formed of a plurality of parts; comparing information about the recyclable sports article to the at least one reference data block to validate that the recyclable sports article is acceptable for the recycling process and recording the validation in the blockchain ledger; separating the plurality of parts of the recyclable sports article and recording the separation in the blockchain ledger; recycling the separated plurality of parts of the recyclable sports article to form a recycled plurality of parts and recording the recycling in the blockchain ledger; building a regenerated sports article from the recycled plurality of parts; and, recording the building in the blockchain ledger.

In some embodiments the blockchain ledger contains a chain of origin for each part of the regenerated sports article, such that each part of the regenerated sports article is traceable back to the recyclable sports article from which the part originated. There are many benefits to having this level of detail recorded of a recycling process. It may be necessary to have clear transparency of the process to achieve certain certifications that the process and the resulting articles are truly recycled. Authorities or certification organizations may need to be able to track each article through the process to verify that certain requirements are met. Similarly, this high level of transparency is crucial for gaining the trust of consumers. In a world where consumers are increasingly conscious about the impact of their purchases on the world and the environment, it will be a very powerful selling tool to be able to demonstrate the exact origin of their purchased article. Additionally, there are internal advantages to having this level of detail recorded for the origin of every article. If a fault is found in a regenerated product, every other product from that batch can be easily found and traced. It may even be possible to identify what input recyclable article was the cause of the fault. This sort of information can be used to inform future recycling processes and identify faults in recyclable articles that may not have been anticipated. In some embodiments the chain of origin for each part of the regenerated sports article is visible to the consumer of the regenerated sports article.

In some embodiments the chain of origin includes details on energy consumption, water consumption or distance travelled during the recycling process. This information is tracked throughout the recycling process. This information is accessible by organizations or authorities to verify that the products meet certain standards. This information is accessible by consumers to inform them of the impact their purchase has had on the world and the environment.

In some embodiments the recording step involves scanning a unique identifier on the recyclable sports article or regenerated sports article. Using an identifier that is unique to each individual product allows for closer recording of each article through the recycling process and ensures that the correct data regarding origin or energy consumption etc. is attributed to each article. This is a closer level of detail than if only each batch or each shipment had a shared identifier. In some embodiments the unique identifier may be at least one of a QR code, an RFID tag or an NFC antenna.

In some embodiments the recycling step may involve mechanical and/or chemical recycling sub-steps.

In some embodiments the recycling step may involve different recycling sub-steps for each of the plurality of parts.

Another aspect of the present invention includes a computer program, the computer program comprising execution instructions which, when the program is executed by a computer, cause the computer to record any one of information (i.) to (iv.) in a blockchain ledger, wherein the blockchain ledger comprises at least one reference data block; and wherein the program then causes the computer to compare any received information (i.) to the at least one reference data block to generate either a validation message or a rejection message.

This computer program can be run on any computer in a wider system of peer-to-peer connected devices. In this context a computer can be any device on which a computer program can be run; for example, a desktop computer, a laptop computer, a handheld mobile phone etc.

### 4. Short description of the figures

Aspects of the present invention are described in more detail in the following by reference to the accompanying figures. These figures show:
- Fig. 1:: a flow diagram showing how parts of a sports article can be separated into different batches and remade into new sports articles;
- Figs. 2a-d:: a schematic illustration of the display screens on a mobile device application;
- Figs. 3a-b:: a schematic illustration of the display screens on a mobile device application for a regenerated article;
- Figs. 4a-b:: a schematic illustration of a process flow chart, showing the steps of recycling a sports article according to an embodiment of the present invention.

### 5. Detailed description of preferred embodiments

In the following, exemplary embodiments of the present invention are described in more detail. While specific feature combinations are described in the following with respect to exemplary embodiments of the present invention, it is to be understood that the disclosure is not limited to such embodiments. In particular, not all features have to be present for realizing the invention, and the embodiments may be modified by combining certain features of one embodiment with one or more features of another embodiment.

### Purchase Step

A consumer can buy a recycled/recyclable shoe or garment in store or online, same as any other article. However, a recyclable article is not intended to be owned by a consumer forever. The goal is for the consumer to return this article so that it can be recycled.

There may be incentives for the consumer to return the article that appear at the purchase stage. For example, at purchase the consumer may pay a deposit that will be returned when the article is returned. Alternatively, the consumer may purchase a subscription. The subscription may provide them with a certain shoe that they can own temporarily, and this shoe will be replaced for no additional cost when it becomes old and worn. The subscription may be purchased in a single payment or regular instalments.

The article must be identifiable in a way that can be validated and not copied. A counterfeit article should not be able to enter the systems described below because it might be made of different materials that would interfere with the recycling processes.

The consumer that purchases the shoe must also be identifiable so that the shoe can be reclaimed or tracked down for the recycling process.

The article may be identifiable through an attached indicium - e.g. a QR code printed somewhere on the shoe. The advantage of this option is that the QR code is simply printed on the material, and no additional materials (that may not be recyclable) are necessary. Alternatively, each article may have an inbuilt NFC antenna for close range communication to a compatible scanner. Similarly, an RFID tag could be used. Article identification can therefore happen by scanning the article on sale, either in the shop or in the warehouse before delivery. The only problem with these latter two options is that they require small circuitry components that will not be recyclable with the rest of the shoe, so would need to be removed before recycling.

The consumer can be identifiable through an app or website membership system. Each consumer would be required to obtain a unique code or identifier before they could complete their first purchase. This same code or identifier can then be used for all subsequent purchases.

The preferred way to collate these means for identification is using a blockchain system. A blockchain ledger can act as an article registry, listing all articles if they are registered upon creation. Either using the QR code or the NFC/RFID mechanisms. The blockchain ledger can also act as a membership list, recording each consumer who registers for participation in the recycling system.

Upon purchase of an article, a specific article can be linked to a specific consumer and recorded in the blockchain ledger.

### Use Step

The consumer will use their shoes or garment the same as any other article. It is also possible for a consumer to transfer ownership of an article to a friend or family member. This transfer can be tracked on the app/blockchain ledger. Some specific activities can be tracked by the consumer as they use the article, as discussed more below.

### Return Step

A circular recycling process relies on consumers returning articles. There may be a number of ways to trigger an article being returned. In these examples it is assumed that the main communication means between the article manufacturer/recycler and the consumer is an app. The same mechanisms could be used with other communication means, such as email, website alerts or physical letters. Return triggers can be one of the following:
- User initiates return. Possibly because the original article is wearing out, or because a new article is available, and they want to upgrade. Returns can be initiated on the app by the consumer or in store.
- The app tells the consumer that their article has worn out. Ideally through activity monitoring, the app will know how far the consumer has run etc. in the shoes and will be able to alert the consumer that the performance will be deteriorating. Alternatively, without details of how much the article has been used, after a set amount of time the app will assume that the article has been worn out and will let the consumer know that a new pair might serve them better.
- The app tells the consumer that their article is needed in the local recycling process so can they please contribute their old footwear/garment. This is discussed more below.

The actual return process can also be done in a number of ways:
- Returning the article directly to a store.
- Returning the article to an allocated collection point.
- A collection/postal service. For example, the recycling facility can send the consumer an empty package that already includes the address/postage costs, so all the consumer needs to do is put their article in the package and send it. This is advantageous for the consumer as it requires very little effort.

It may be necessary for the consumer to prepare the article for return. For example, the consumer may have to clean the article before returning it. Alternatively or additionally, there may be parts of the article that can be separated by the consumer already, in preparation for these parts to be recycled separately. For example, the consumer may be asked to remove the laces or insole of a shoe, or other easy steps. Alternatively or additionally, there may be more complex separation steps possible, depending on the construction of the article. For example, washing the article in warm/hot water or heating the article in a microwave may melt some adhesives and allow for different parts to be separated. These adhesives may be used between the outsole and midsole, or between the midsole and upper, or between the label and the textile upper etc.

Through the system that manages the blockchain article registry, the registry can be checked regularly for articles that have reached an age where they should be replaced. This can be done by the system reviewing the date stamps from the purchase days of each article. A maximum acceptable age can be programmed into the system. For example, 18 months. The system can check for blocks in the chain corresponding to purchases older than 18 months, based on the time stamps on the blocks. The system can then trigger a notification to the relevant consumer when their article is over the maximum recommended age.

Similarly, if linked to an activity tracker, there may be a maximum level of use (e.g. maximum kilometres run in shoes) for a given article programmed into the system. If each activity is also added into the blockchain registry, then when the chosen maximum is reached, the system can again trigger a notification to the consumer.

The date that a notification is sent to a consumer can be recorded into the blockchain registry. A time window can then be provided in which the consumer is expected to return their article. If this time limit is reached, the system can trigger a follow up notification to the consumer to act as a reminder. This can continue until a return has been registered into the system. A return can be registered using a combination of a consumer stating that they have initiated return of their article (maybe by clicking a button on an app or scanning a code on a return box), and also the article being received at a collection centre and being scanned. Together these two actions (one by the consumer, one by the collection centre) provide reliable information that the article has been successfully returned back into the system.

The material collected for recycling must be transported to the recycling location. The recycling location may be very close to the store where the material was collected or is the address that the used articles was sent back to. This way there is minimal transport of the material before it is recycled. Alternatively, the recycling location may be in a different location from where the used articles were collected or sent to. When this is the case, the distance covered by the material to be recycled can be tracked. This might be different for each batch of different materials if they are to be recycled in different locations. The distance can be tracked in a number of ways - for example the actual vehicle that transports a batch of material can be tracked, with final distance covered recorded at the end of the journey. Alternatively, the distance between a given collection point (store/collection centre) and a specific recycling centre can already have been calculated and stored as a data point somewhere on the blockchain. Then, when a batch is recorded as arrived at the recycling centre, the arrival block in the blockchain can be linked to this data point and the distance can be recorded in this way.

As discussed in more detail below, distance covered by the recycled material is one factor that can be recorded against an article so that a consumer knows the distance travelled by their article. At this stage of the process, the distance covered between the collection step and the recycling facility can be tracked against each batch of material to be recycled. This information can be stored in the blockchain along with other information about the batch of material being recycled.

### Validation Step

It is crucial to the effective operation of the recycling process that there is no contamination of "alien" material into the process. Only articles that have been approved for recycling can be returned and recycled using the process disclosed herein. The attempted recycling of unapproved articles can cause delays in the recycling facility as the incorrect item is identified and removed. In a worst case, unapproved articles may contaminate batches of recycled materials or break machinery.

It may be easy to mistake articles being made from the approved recyclable materials to be recyclable. However, if this article was manufactured using different methods, such as different adhesives or different dye chemicals, then the existing separation or recycling processes may no longer be suitable. For this reason, validation checks must be made before an article enters the recycling processes. The origin of an article may be enough to verify that this article is recyclable. Alternatively, there may be certification marks on an article that could be used to verify what materials it was made from. Therefore, a "suitability" check must be performed before an article enters the recycling process. If an article cannot be suitably verified during this step, it may be removed from the recycling process and returned to the consumer or disposed of in another way.

Similarly, it is crucial that a certain level of quality is met by the articles entering the recycling process so that the recycling process is not compromised. One way an article can be compromised is if a consumer has added dye or colouring to the material. This is commonly seen when a consumer wishes to customize or personalize their article. If the colouring cannot be removed and it cannot be identified, then the colouring risks contaminating the recycling process. In this case a coloured returned article does not meet the required level of quality and so will not be accepted into the recycling process. Another way an article can be compromised is if a consumer has added decoration to the article that cannot be easily removed. Attaching additional elements via adhesives or sewing, or embellishments in the form of embroidery or patchwork or any other embellishment may all be difficult to remove. If the additional elements cannot be removed then they risk contaminating the recycling process. In this case a customized article does not meet the required level of quality and so will not be accepted into the recycling process. It is because of these examples given and any other changes made to the article that might risk contaminating the recycling process that a quality check must be performed before an article enters the recycling process. If an article does not meet the required quality level, it may be removed from the recycling process and returned to the consumer or disposed of in another way.

In order to validate the articles entering the recycling process, both for suitability and for quality, minimum requirements are set that must be met by an article. This validation step is likely to happen at a collection centre or recycling facility. The validation step is part of the entry of a new article into the recycling phase in the blockchain ledger. In order to enter a given article into the recycling phase, the blockchain will require information on both the suitability and quality of this article.

The blockchain ledger includes a list of approved origins or certification marks. Only if an article comes from one of the origins listed or possesses one of the certification marks listed will the blockchain ledger allow the article to enter the recycling phase. Only once the blockchain ledger allows the article to enter the recycling phase will the collection centre or recycling facility process this article for recycling. If the article does not have an origin listed or a listed certification mark, then the blockchain will not allow the new data entry, and the collection centre or recycling facility will reject this article.

Similarly, the blockchain ledger includes a list of minimum quality values that the article must meet. At the collection centre or recycling facility, quality measurements are made for each article received. These quality measurements are entered into the system when an article is to enter the recycling phase. Only if an article meets the minimum quality values will the blockchain ledger allow the article to enter the recycling phase. Only once the blockchain ledger allows the article to enter the recycling phase will the collection centre or recycling facility process this article for recycling. If the article does not meet the minimum quality values, then the blockchain will not allow the new data entry, and the collection centre or recycling facility will reject this article.

### Recycling Step

It is desirable to provide the consumer with insights into the recycling process so that they feel a part of it.

The first step for recycling is separating different parts of the article that are going to be recycled separately from each other. This may be done by the consumer as discussed above. Alternatively, there may be disassembly centres that receive the articles (in stores or in different specific locations).

It is advantageous to collect large quantities of materials to be recycled at local locations in order to minimize the number of transport journeys required to transfer the collected materials to a recycling centre. It is possible that different parts of an article, made of different materials, will be recycled at different recycling centres. It may be necessary to provoke consumers to generate more returns of specific articles in specific geographic locations in order to reach a minimum quantity required for recycling or transportation to a recycling centre. In this case, a notification can be sent to users in the area who have the necessary article and who will soon require new articles - the app (or other communication means) can tell the consumer that their article is needed in the local recycling process so can they please contribute their old footwear/garment. This way a minimum batch size of each material can always be met before the recycling/transportation step.

This notification can be initiated by the blockchain, similar to the notifications sent in the return step. Here, for example, as each article is registered as being returned to Recycling Centre A, a total tally of each material involved is created. For each material, a minimum limit is provided for the amount of material required for efficient onward transport or for entry into the recycling process. A time limit can also be set, before which the minimum quantity limit must be reached before notifications are sent to consumers of the same article in the same area.

There are two main sorts of recycling that will be used - chemical recycling and mechanical recycling, used differently for different parts of each article. After a consumer returns an article, the return is recorded in the blockchain ledger. Additionally, each part of the article is linked to a batch number related to the batch of similar parts it is to be recycled in. For example, for a returned shoe, the laces may get a first batch number, the outsole may get a second batch number, the midsole may get a third batch number, the upper may get a fourth batch number and the heel counter may get a fifth batch number. Each of these batch numbers are recorded against the returned shoe in the blockchain ledger.

The consumer may then track the progress of each recycling batch to see the progress of the different parts of their shoe.

Here a TPU material is used as an example as the different recycling steps are described. The different stages of recycling may include first a cleaning or washing stage. Secondly, the different grades/types of materials can be separated. Thirdly, each batch of cleaned material of the same grade is then shredded/cut into small parts. Fourthly the shredded TPU material is compacted into pellets. It is these pellets that are then the easiest form of the material to transport and further process. Fifthly, the pellets are chemically upgraded into material of comparable quality to virgin material. It is this upgraded material that is then manufactured into new parts in the next generation of articles.

At each of these steps a consumer can receive a notification that their old article/material has progressed as discussed further below.

In terms of tracking the process, each article will be tracked into the recycling facility using the identification means (QR code/RFID tag etc.). As discussed above, this information alone, or in combination with additional information from the consumer, will trigger the return event to be recorded in the blockchain ledger. The article will be washed with other similar articles. This washing step will be recorded against the identification means of each of the articles washed. Each article will then be separated into the parts that have to be recycled separately. For example, from a single shoe ("Shoe 1") that is entering the recycling process, the midsole might enter into batch #X of midsoles, the outsole might enter into batch #Y of outsoles, the upper might enter into batch #Z of uppers etc. The identification of an article (QR/RFID) will then be recorded against each of these batches for the different parts.

### New Article Creation

New articles can be created once the recyclable materials have been recycled back into a state that is equivalent in quality to virgin material. Each batch of successfully recycled material can be transferred from the recycling station to the manufacturing station. These recycling and manufacturing stations may be different locations within the same factory. Alternatively, these stations may be in different factories at different locations. Similarly to in the return step, if the batch of recycled material has to be transported before it can be used in the manufacture of a new article, then this distance can be recorded again against the batch of material in the blockchain.

The manufacture step for a second-generation shoe (i.e. a shoe made entirely from materials that have been recycled from previous shoes) or other article is the same as the manufacture as an article from virgin material. The process steps should be the same as the quality of material should also be the same. The energy consumption of the manufacturing process, as well as the water used and other details that might be interesting to a consumer can be recorded against the new articles on the blockchain.

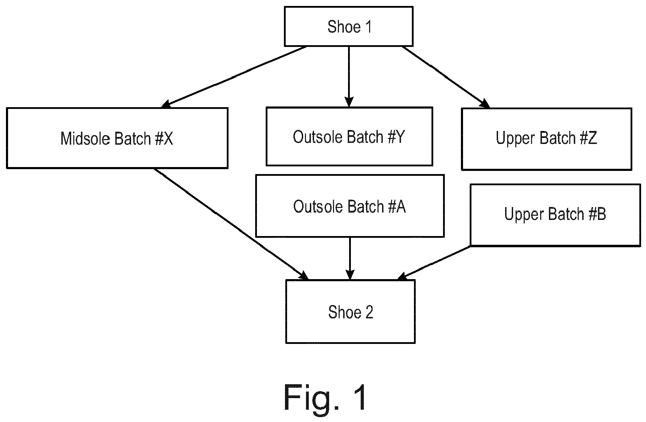

**Fig. 1** shows where the material in a second-generation article might originate from. Starting from a shoe made of virgin material, the unique identifier (QR/RFID etc.) of the shoe is scanned when it is returned by the consumer to confirm that this specific shoe has entered back into the recycling process. The shoe is separated into parts made of different materials. These parts of the shoe are split into different batches of similar materials for recycling. Each batch is allocated a unique identifier of its own. This may also be something that can be scanned (QR/RFID etc.) or it could be an identifier code written on the batch container that can be typed into a computer system. The unique identifiers of each batch are recorded in the blockchain against the shoes that the materials inside came from.

In the case shown in Figure 1, the midsole from shoe **1** was collected into midsole batch #X, the outsole was collected into outsole batch #Y, and the upper into upper batch #Z. When a new article, in this case a second generation shoe ("Shoe 2") is produced from recycled parts, it might be made of a midsole from batch #X of midsoles, and so will contain some of the same material as shoe 1, but the outsole might be from batch #A of outsoles, the upper might be from batch #B of uppers etc., and therefore these parts are made from entirely different original first generation shoes. Shoe 2 is provided with a new unique identifier (QR/RFID etc.), and this identifier is recorded in the blockchain against the batches that the parts came from. So now, when a consumer buys Shoe 2, they will be able to see information associated with all the shoes that went into all of the batches that produced their new shoe. Technical information about number of recycling cycles and energy consumption of the process etc. (more detail below) as well as the story behind the previous lives of the previous shoes (more detail below).

### Mobile Device Application

A mobile device application ("app") can be the main route through which a consumer will be contacted and through which the consumer can get a window into the recycling process. Alternatively, a website with a "member's area" can be used. A website may notify the consumer of changes using email. Alternatively, more old-fashioned methods of communication such as post can be used. Here we focus on the possibilities available when using an app.

The app can link to a number of existing online functions:
- Online shopping channels. Purchases made through existing shopping apps can be automatically uploaded into the new recycling/app in order to record a purchase connected to a consumer. The new app can create a virtual wardrobe in which all purchased articles can be seen by a given consumer. The advantage of this being virtual is that it can also include articles that have been used and returned. The app can provide a full history of all of the recycled articles owned by the consumer. Additionally, the app, together with a shopping app, can provide the user with recommendations for future purchases. The recycling app can identify when previous articles might be close to the end of their lifetime and can trigger the shopping app to start sending recommendations for new articles. New article recommendations can be based on previous purchases or browsing history etc.
- Activity tracking apps, such as running or cycling or workout apps. Activities performed in a given garment may be tracked in the activity tracking app and transferred to the recycling app where they can be tracked against the garment worn and stored in the blockchain ledger. Each run or ride or swim or workout etc. can be recorded against a specific article. Additionally, races such as 5k runs, charity races, marathons or triathlon events can be recorded against a specific article. This can be used to add to the history of an article within the recycling app. This can also be used to track the distance covered in an article so that the app can suggest when it is time for a new article to be bought.

This information also provides useful details to the manufacturer to further improve the articles. For example, the average whether conditions in a given geographic area during outdoor activity can be compared to the conditions that the articles are returned in at their end of life. This allows information on the effects of cold/rain etc. to be tracked.

As discussed above, based on information about each batch of recycled material stored in the blockchain ledger, each new article can link the consumer to information about the environmental impact of their purchase. For each part of the article, the sorts of information provided may include:
- Miles that the material was transported to the recycling centre, as well as miles the material was transported from the recycling centre to the manufacturing site, and then to the new consumer.
- Energy consumption of the recycling process for each part.
- Water consumption of the recycling process for each part.
- Material origin for each part.

Additionally, based on information about each batch stored in the blockchain ledger, each new article can also have an origin story created that a consumer can see after purchase. For each part of the article, the sorts of information provided may include:
- How many cycles of recycling the part has been through since it was entirely virgin material.
- Where was the virgin material sourced from.
- Where was the recycled material sourced from - i.e. was all of the input material sourced in the same geographic location as the new consumer, or were older articles sourced from a very wide region and recycled far from the new consumer.
- Races run or events attended in articles that entered into that recycling batch. As a large number of parts or articles will be included in each batch, it is possible that a new article could have traces of older articles that have taken part in many previous events.
- Whether the batch contains any material from a well-known previous owner or a collectible shoe. For example, a famous sports person or other celebrity may have worn a shoe that went into the batch, and this information can be seen by the new owner. Similarly, a limited edition/collectible shoe launch may have been included in the batch for recycling, making the new article more desirable to a new consumer.

The overall intended effect is to make a consumer feel part of something bigger, and not simply an isolated consumer of a single disposable article.

The end of life details of an article or material can also be recorded in this system and consumers can be notified. For example, it is possible that after a certain number of rounds of recycling, the material required for the midsole of shoes no longer reaches the standards/purity levels necessary to create high quality articles. It may then be the case that the material is passed onto an external company for an alternative use where the quality of the material is less important. A consumer can be notified that the material is being retired from the shoe/apparel industry and can be informed of where it will go next.

Overall, it is a very large amount of information that will become available from each article. Over a number of generations this may become more than the consumer is interested in. The app further lets the consumer chose the information that they would like displayed or that they would like to be notified of.

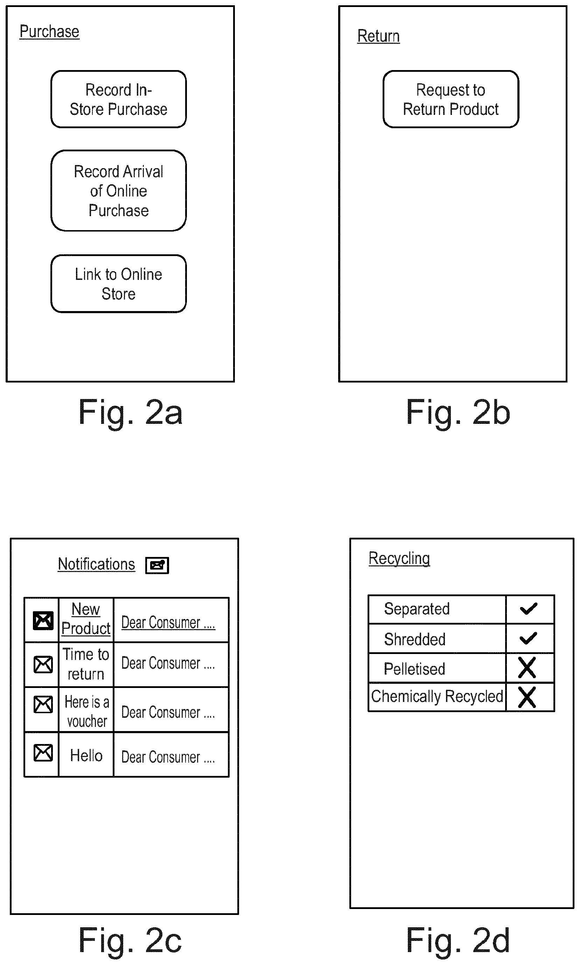

Some examples of app screens that a consumer might see when they are part of this scheme are shown in **Fig. 2a-2d****.**

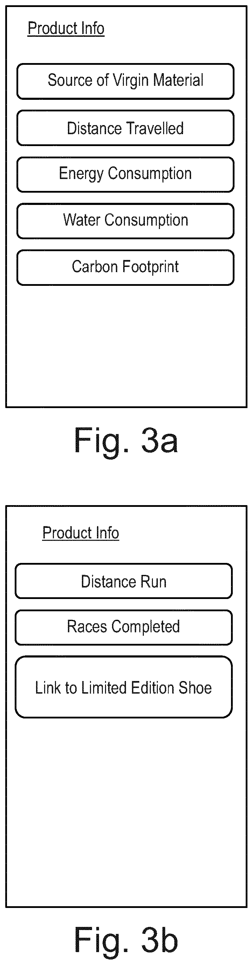

The consumer may be able to see different information about their article on the app depending on what generation the article is. For a first-generation article, only information about the material and the manufacturing is available. For a second-generation article more information about previous use is available, shown in **Fig. 3a** and **3b****,** where the article is a running shoe.

### Summary of Blockchain Involvement

There are many reasons that the use of Blockchain for this system is advantageous. A blockchain system is decentralized - it lives on lots of computers. This is one way that the integrity of the entries is maintained. If one computer goes down, others still have the chain intact so power outages etc. do not pose a risk.

In essence, a blockchain is a series of entries or "blocks". Each block contains some data from the block immediately preceding it. Similar, the next block added to the chain will contain some data from that block. In this way each entry/block cannot be tampered with after entry. Each entry/block will contain a timestamp stating when it was added to the chain. As the story of each shoe/garment grows, so does the strength of the validation of that blockchain. For example, as discussed above, one new article can link to information (source, cycles of recycling, environmental impact etc.) about each part (midsole, outsole, heel counter, upper, laces etc.). This provides many different links between blocks, each referring back to the one before it. This creates a very strong chain.

Another advantage of a blockchain system is that it is anonymous. The data entered for each block can be codes or numbers - the precise data required is dictated by the rules of the blockchain. It can be decided that no personal details of people or specific places will be included in the information recorded. Individual consumers can be identified by a number or a code, without revealing any personal information about them. This maintains the privacy of the users.

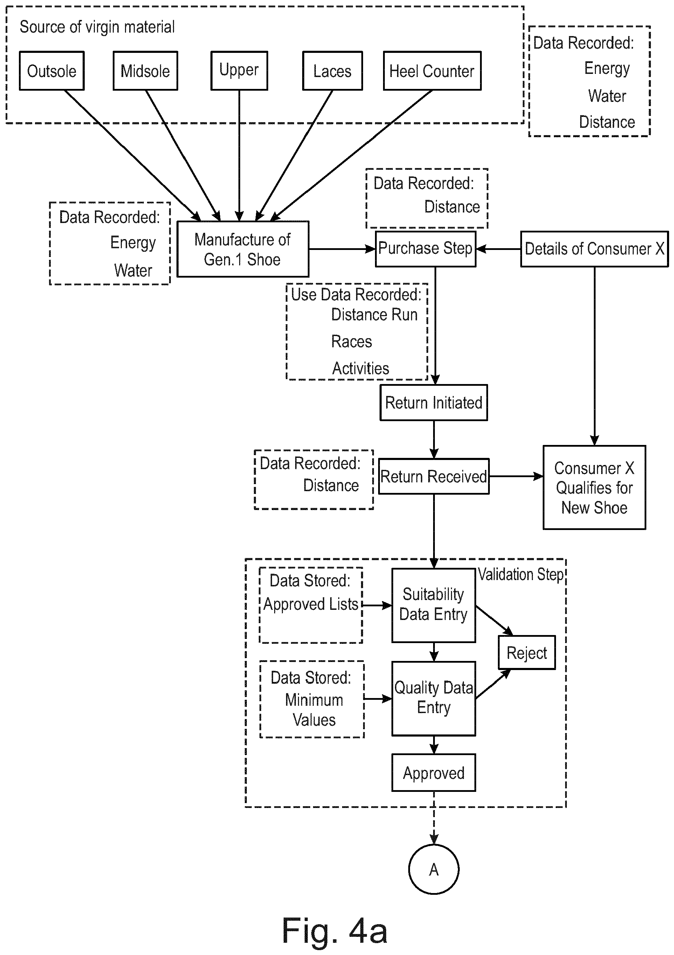

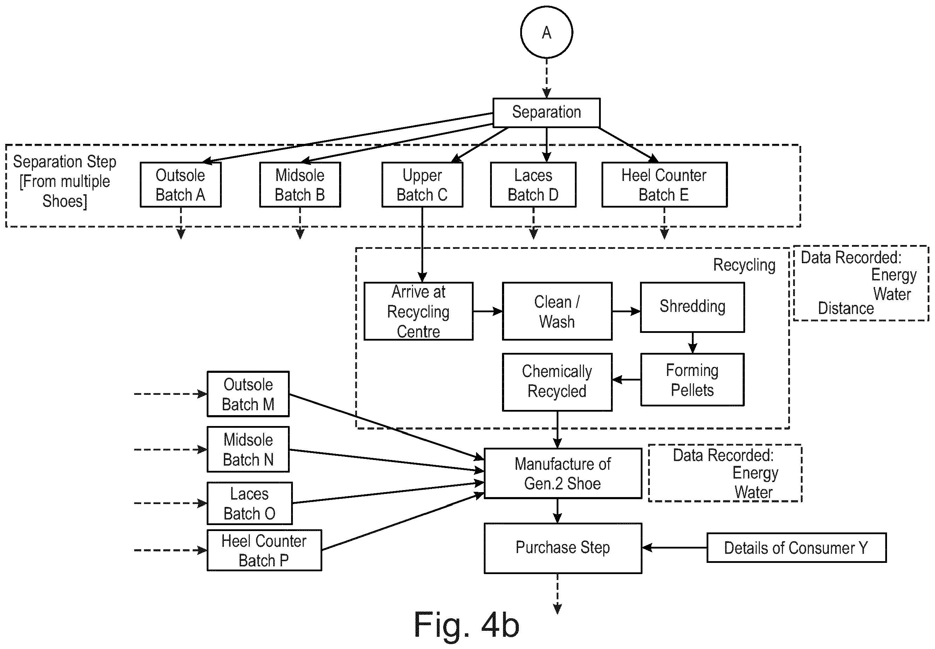

A larger process flow chart is shown in **Fig. 4a** and **4b****,** showing the manufacture and purchase of two generations of a shoe. The points during this process where new blocks can be added to the blockchain may include:
Each batch of virgin material has a unique identifier - this identifier is scanned or input in another way. These are the first blocks of the blockchain. Along with each batch can be connecting blocks containing data ("data blocks") related to each batch. For example, the energy consumption required to create the batch of virgin material can be linked to the batch in the blockchain. Also, the distance that the virgin material has travelled to the manufacturing location can be linked to the batch in the blockchain. These data points are likely input manually.

The separate batches of virgin material are linked at the point of manufacture. Material from all of these batches are used in the manufacture of a new article - here a shoe. So all of the batch blocks are connected to a manufacture block. This block will include information about the date and location of the manufacture. Similarly to the data blocks above, here there are data blocks connected to the manufacture block containing information about the manufacture itself, such as energy and water consumption.

The manufacture step creates articles that are each provided with a unique identifying code that can easily be scanned or input (QR/RFID etc.). Each code is scanned or input to create a new block branching out from the manufacturing block. These new blocks are "article blocks" that refer to a specific article that has been created.

Each consumer that applies to be part of this scheme has a "consumer block". This block is created when the consumer downloads the app, or creates a user profile on a website, or fills in a form in a store. The consumer block includes some details about the consumer, but not enough for the consumer to be identified. The consumer may be provided with a unique identifier that can be scanned or input in order to identify them (e.g. a QR code).

In a purchase step, one article block and once consumer block are linked. This link can be initiated during an in-store purchase by the retail assistance scanning both the QR code of the article and the QR code of the consumer and the retain assistant can create a purchase block in the blockchain via the store computer (or whichever system in the store is an approved contributor to the blockchain). If the purchase is made online then the app/website can record the details of the consumer and a handler in a distribution centre can scan the QR code of the article being sent to them. Upon receiving the article, the consumer can then also scan the QR code and create a purchase block in the blockchain to record the purchase. Alternative methods are possible if other unique identifiers are used. Especially in the case of online purchases, the distance between the distribution centre and the consumer can be recorded as a data block.

During the use of the article the consumer can record various activities performed with the article as data blocks. This may be done manually - for example if the consumer runs a recognised race event in a pair of shoes, they can scan a QR code on their race number or at the finish line, and also scan the QR code on their shoes and create a data block combining these two codes in the blockchain as new data block stating that these shoes have run this specific race. Alternatively, if the consumer uses an activity tracking app, then this app can itself send details of activities to the consumer's app. The app is an approved contributor to the blockchain, and therefore can create a new block, here a new data blocks associated with activities performed.

If the consumer initiates their own return on the app, then the initiation (pressing a button) creates a block stating their intention to return the shoe. If the shoe does not arrive at a sorting centre within a certain time limit, seen by comparing the date to the date stamp on the new block, then the system can remind the consumer to finalise their return. Alternatively, if the system initiates the return (either because the article is probably too old/worn to be performing optimally, or because the material is needed for local recycling quotas), then the system creates a new block in the chain recording the request sent to the consumer. Similar to above, if the shoe does not arrive at a sorting centre within a certain time limit, seen by comparing the date to the date stamp on the new block, then the system can send a reminder to the consumer to return the article.

When the article is received at a sorting centre (collection centre or recycling facility), it can be scanned by a handler to confirm that it has arrived. This scan creates a block in the chain to confirm that the article has been returned. This will then have a knock-on effect for the consumer who previously owned that article. The return block will initiate a new block for the consumer showing that they qualify for a new article. A data block can be created at the return step, recording the distance that the article travelled from the consumer to the recycling centre.

The returned article must be verified as suitable for recycling and of high enough quality to be recycled. When the handler at the sorting centre scans the article, the system will be triggered to ask two sets of questions. Firstly, a question to verify the suitability of the returned article. In response to this suitability question, the handler may input the origin of the article, such as the brand that produced the article and/or the range the article belongs to. Alternatively, the handler may input that the article carries a certain certification mark that verifies its suitability for recycling. The system will compare this input to a list of approved origins and verification marks stored within the blockchain ledger as a data block. If the input from the handler is on the approved list, then the second question will be asked. The second question verifies the quality of the returned article. In response to the quality question, the handler may input certain quality measurements from the returned article. The system will compare this input to minimum quality values stored within the blockchain ledger as a data block. If the input values are all above the minimum stored values, then the system will verify the block created in the above step confirming that the article was returned and will create a new block to confirm that this article can enter the recycling process.

The returned article then has to be separated into the separate materials to be recycled. During this step, the unique identifiers of each article are scanned/input along with the code of each recycling batch that parts of the article are entered into. This way the article is linked to recycling batches for each of the separated parts. The separated parts themselves do not have any identifiers, but are treated as part of a larger batch. Each batch has an identifying code. This way each article may be linked to multiple batches, depending on how many parts it is separated into. And every batch is linked to a large number of articles.

During the steps of the recycling process, the handlers can record in the blockchain every time a batch progresses through a given step. For example, after successful cleaning, the handler can input the code for the current batch to create a block that confirms that the batch has passed the cleaning stage. Similarly, after shredding is complete, the next handler can input the code for the current batch to create a block that confirms that the batch has passed the shredding stage. At each of these stages data blocks can be created to record data such as energy and water consumption.

The manufacture process can now start again for second generation articles, recording information in the blockchain in the same way.

## Claims

1. A system for recording a recycling process of a recyclable sports article and a generation process of a regenerated sports article, the system comprising:
a. a network of connected receivers configured to receive:
i. information regarding the recyclable sports article formed of a plurality of parts;
ii. information regarding the separation of the plurality of parts of the recyclable sports article;
iii. information regarding the recycling of the separated plurality of parts; and
iv. information regarding building the regenerated sports article from the recycled plurality of parts;
b. a blockchain ledger, wherein the connected receivers are configured to record the information i. to iv. in the blockchain ledger;
c. wherein the blockchain ledger comprises at least one reference data block; and
d. wherein the system is configured to compare information i. to the at least one reference data block to validate that the recyclable sports article is acceptable for the recycling process.

2. The system of claim 1, wherein the reference data block includes a list of suitable product origins and/or a list of minimum quality values.

3. The system of any of claims 1 or 2, wherein the system further comprises a mobile device application, accessible to consumers of the recyclable sports article or the regenerated sports article.

4. The system of claim 3, wherein information regarding activities performed in the recyclable sports article by the consumer is recordable in the mobile device application, and this information regarding activities is transmitted to the connected receivers and recorded in the blockchain ledger.

5. The system of any one of claims 3 or 4, wherein the system further comprises an alert transmitter that generates alerts within the mobile device application based on information recorded within the blockchain ledger.

6. The system of claim 5, wherein the alert transmitter generates a return alert for when the recyclable sports article is to be recycled.

7. The system of claim 6, wherein the alert transmitter calculates the time elapsed from a purchase of the recyclable sports article recorded in the blockchain ledger and the current date, and generates a return alert if the calculated time elapsed is above a maximum allowed time elapsed.

8. The system of any one of claims 6 or 7, wherein the alert transmitter calculates a total amount of activity performed in the recyclable sports article recorded in the blockchain ledger, and generates a return alert if the calculated total activity is above a maximum allowed activity.

9. The system of any one of claims 6 to 8, wherein a recycling facility sends information to the connected receivers regarding recyclable sports articles required for a minimum batch size of the recycling process, and this information triggers the alert receiver to generate a return alert to the consumers of these recyclable sports articles.

10. A method of producing a regenerated sports article, comprising the steps of
a. obtaining a blockchain ledger stored on a network of connected receivers, wherein the blockchain ledger comprises at least one reference data block;
b. obtaining a recyclable sports article, wherein the recyclable sports article is formed of a plurality of parts;
c. comparing information about the recyclable sports article to the at least one reference data block to validate that the recyclable sports article is acceptable for the recycling process and recording the validation in the blockchain ledger;
d. separating the plurality of parts of the recyclable sports article and recording the separation in the blockchain ledger;
e. recycling the separated plurality of parts of the recyclable sports article to form a recycled plurality of parts and recording the recycling in the blockchain ledger;
f. building a regenerated sports article from the recycled plurality of parts; and
g. recording the building in the blockchain ledger.

11. The method of claim 10, wherein the blockchain ledger contains a chain of origin for each part of the regenerated sports article, such that each part of the regenerated sports article is traceable back to the recyclable sports article from which the part originated.

12. The method of claim 11, wherein the chain of origin for each part of the regenerated sports article is visible to the consumer of the regenerated sports article.

13. The method of any of claims 11 or 12, wherein the chain of origin includes details on energy consumption, water consumption or distance travelled during the recycling process.

14. The method of any one of claims 10 to 13, wherein the recording step g. involves scanning a unique identifier on the recyclable sports article or regenerated sports article.

15. The method of claim 14, wherein the unique identifier is at least one of a QR code, an RFID tag or an NFC antenna.
